# EUROPÄISCHE PATENTSCHRIFT

(11) **EP 4 347 704 B1**
(45) Veröffentlichungstag und Bekanntmachung des Hinweises auf die Patenterteilung: **13.05.2026**
(21) Anmeldenummer: 22732140.3
(22) Anmeldetag: 03.06.2022
(51) Int. Cl.: C08L 9/00, B60C 1/00, C08K 3/00, C08K 5/00, C08K 5/10

(54) **KAUTSCHUKZUSAMMENSETZUNG ENTHALTEND ADDITIV UND DESSEN VERWENDUNG**
RUBBER COMPOSITION CONTAINING ADDITIVE AND ITS USE
COMPOSITION DE CAOUTCHOUC CONTENANT UN ADDITIF ET SON UTILISATION

(30) Priorität: 04.06.2021 EP 21177722
(43) Veröffentlichungstag der Anmeldung: 10.04.2024
(73) Patentinhaber: Schill + Seilacher "Struktol" GmbH, 22113 Hamburg (DE)
(72) Erfinder: BÖRGER, Volker, 22085 Hamburg (DE); GEIDEL, Christian, 22303 Hamburg (DE)
(74) Vertreter: Eisenführ Speiser
(86) Internationale Anmeldenummer: PCT/EP2022/065214
(87) Internationale Veröffentlichungsnummer: WO 2022/254019

(56) Entgegenhaltungen:
- EP-A1- 0 420 789
- US-A- 5 698 620

## Beschreibung

### Gebiet der Erfindung

Die vorliegende Erfindung betrifft eine Kautschukzusammensetzung, die Kautschuk und mindestens ein Kautschukadditiv auf Basis eines höher-molekulargewichtigen Kolophoniumharzesters enthält. Weiterhin betrifft die vorliegende Erfindung die Verwendung des Kautschukadditivs in einer Kautschukzusammensetzung, einen Reifen, bei dem wenigstens ein Bauteil zumindest teilweise aus der erfindungsgemäßen Kautschukzusammensetzung hergestellt ist, sowie Verfahren zu dessen Herstellung.

### Hintergrund der Erfindung

Fahrzeugreifen müssen verschiedenen Anforderungen im Straßenverkehr gerecht werden. Üblicherweise optimiert man die Mischungsrezeptur der Laufstreifen für die spezifischen Anforderungen an einen Reifen in seinem jeweiligen Einsatzgebiet. Bei der Entwicklung von Laufstreifenmischungen für Ultra High Performance- (UHP) und Sommerreifen wurde in den letzten Jahren versucht, Verbesserungen von Eigenschaften wie Reifenhaftung, Reifenabrieb und Reifenhandling zu erreichen. Für diesen Zweck wurde den zur Reifenherstellung verwendeten Kautschukzusammensetzungen für Personenkraftfahrzeuge ein hoher Harzanteil, z. B. auf Basis von Alpha-Methylstyrol-, Terpen- und Coumaronindenharzen zugesetzt.

Der obige Ansatz hat jedoch eine schlechtere Verarbeitbarkeit der Kautschukzusammensetzung zur Folge, insbesondere treten Klebrigkeit, eine hohe Viskosität und fehlende Grünfestigkeit als Probleme auf. Zur Beseitigung bzw. Verringerung dieser Probleme werden in der Kautschuk-/Gummiindustrie eine Vielzahl von Verarbeitungshilfen (Additive) eingesetzt, deren Anwendung häufig jedoch zu Nachteilen bei anderen gewünschten Eigenschaften führt, wie z. B. eine niedrigere Steifigkeit der Kautschuk- bzw. der daraus hergestellten Gummimischung für den Reifen. Dies bedeutet höheren Reifenabrieb und schlechteres Reifenhandling. Schlechte Reifenabriebeigenschaften sind durch das damit freigesetzte Material problematisch (Feinstaubproblematik). Nassgriffeigenschaften des Reifens spielen für die Sicherheit und das Rollwiderstandsverhalten für den Energieverbrauch eine bedeutende Rolle.

Es ist in der Fachwelt bekannt, dass eine Verbesserung einer physikalischen Eigenschaft einer Kautschukzusammensetzung mit der Verschlechterung einer anderen einhergeht. Ein sogenannter Zielkonflikt einer Laufstreifenmischung besteht zwischen der Verarbeitbarkeit der Kautschukzusammensetzung einerseits und mindestens einer der Eigenschaften des Nassbremsverhalten, Rollwiderstands und Reifenabrieb andererseits. Ein solcher Kompromiss zwischen guten Verarbeitungseigenschaften und Nachteilen bei den Performancekriterien wie Reifenhaftung (Nass- und Trockenhaftung, Reifenabrieb und Reifenhandling) wird heute immer weniger akzeptiert.

Die WO 2016/105909 A1 betrifft Kautschukzusammensetzungen, die Kautschuk, Kieselsäure, Organosilan, dass mindestens eine cyclische und/oder verbrückte Alkoxygruppe enthält, und "Kolophoniumharz enthaltendes Material" umfassen. Die beschriebenen Kautschukzusammensetzungen können für die Herstellung von Reifen verwendet werden. Die Kautschukzusammensetzungen können Kolophoniumharzester umfassen. WO '909 offenbart nicht die Verwendung von Kolophoniumharzester mit hohem Molekulargewicht.

Die WO 2017/117578 A1 betrifft ein Verfahren zur Herstellung einer geformten Kautschukzusammensetzung, wobei eine Kautschukverbindung mit einer Extenderverbindung zusammengegeben wird. Die beschriebenen Kautschukzusammensetzungen können für die Herstellung von Reifen verwendet werden. Die Extenderverbindung kann ein Kolophoniumharzester sein, wobei unter anderem Ethylenglykol, Diethylenglykol oder Triethylenglykol als Alkohol verwendet werden kann.

Die WO 2011/130525 A1 betrifft eine Reifenkautschukzusammensetzung, die eine Kautschukverbindung und ein Prozessöl umfasst, wobei das Prozessöl wiederum ein modifiziertes Tallölpech umfasst, und daraus hergestellte Reifen (siehe Zusammenfassung). Tallöl (auch als flüssiges Kolophonium bekannt) ist ein öliges Stoffgemisch, das als Nebenprodukt bei der Herstellung von Zellstoff anfällt. Tallölpech enthält typischerweise 2-8 Gew.-% Fettsäuren, 3 bis 15 Gew.-% Harzsäuren und 30 bis 45 Gew.-% "Unverseifbares Material". Die Säurezahl von Tallölpech liegt zwischen 15 und 50.

Eine Aufgabe der vorliegenden Erfindung besteht in der Entwicklung eines neuen Additivs für Ultra High Performance-(UHP) und Sommerreifen, das die Verarbeitungseigenschaften der Kautschukzusammensetzung verbessert, die für die Herstellung dieser Reifen verwendet wird. Gleichzeitig sollen die übrigen Performanceeigenschaften der Reifen, insbesondere das Handling-Verhalten, die Eigenschaften bezüglich Nass- und Trockenbremsen, der Reifenabrieb sowie das Rollwiderstandsverhalten nicht beeinträchtigt oder sogar zumindest teilweise ebenfalls verbessert werden.

### Zusammenfassung der Erfindung

Gelöst wird die Aufgabe erfindungsgemäß durch eine Kautschukzusammensetzung, die Kautschuk und mindestens ein Kautschukadditiv enthält, dadurch gekennzeichnet, dass das mindestens eine Kautschukadditiv Kolophoniumharzester aus Kolophoniumharz und mindestens einem Alkohol umfasst, wobei das zur Herstellung des Kolophoniumharzesters eingesetzte Kolophoniumharz eine Säurezahl von 130 bis 190 mg KOH/g aufweist und der bzw. die eingesetzte(n) Alkohol(e) mindestens 2 Hydroxylgruppen und nicht mehr als sieben Hydroxylgruppen und ein Molekulargewicht von mindestens 200 g/mol aufweist bzw. aufweisen.

Ein weiterer Aspekt der vorliegenden Erfindung betrifft die Verwendung von Kolophoniumharzester aus Kolophoniumharz und mindestens einem Alkohol als Kautschukadditiv in einer Kautschukzusammensetzung zur Verbesserung der Mooney-Viskosität der Kautschukzusammensetzung und/oder zur Verbesserung von mindestens einem von Abrieb, Haftung und Rollwiderstand eines aus der Kautschukzusammensetzung hergestellten Reifens, wobei das eingesetzte Kolophoniumharz eine Säurezahl von 130 bis 190 mg KOH/g aufweist und der bzw. die eingesetzte(n) Alkohol(e) ein Molekulargewicht von mindestens 200 g/mol und mindestens 2 Hydroxylgruppen und nicht mehr als sieben Hydroxylgruppen aufweist bzw. aufweisen.

Ein weiterer Aspekt der vorliegenden Erfindung betrifft ein Verfahren zur Herstellung eines Reifens, dadurch gekennzeichnet, dass ein oder mehrere Bauteile des Reifens aus einer Kautschukzusammensetzung der vorliegenden Erfindung hergestellt werden und die Kautschukzusammensetzung ausgehärtet wird.

Ein weiterer Aspekt der vorliegenden Erfindung betrifft einen Reifen, bei dem wenigstens ein Bauteil zumindest teilweise aus der erfindungsgemäßen Kautschukzusammensetzung hergestellt wurde, und der Reifen vorzugsweise ein Ultra High Performance (UHP)- oder Sommerreifen ist.

Bevorzugte Ausführungsformen der Erfindung sind Gegenstand der Unteransprüche. Ausführungsformen der Erfindungen umfassen die im Folgenden aufgeführten Bestandteile und können insbesondere aus diesen bestehen.

### Kurze Beschreibung der Figuren

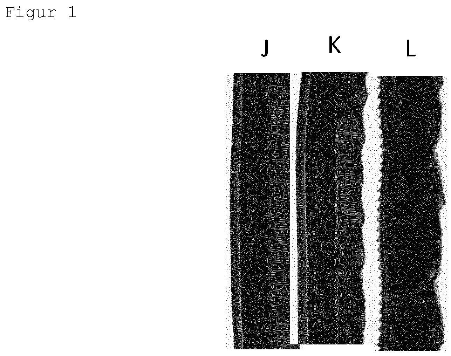

**Figur 1** zeigt drei verschiedene Extrudate, die aus den Kautschukzusammensetzungen J, K und L wie in Beispiel 7 beschrieben hergestellt wurden.

### Ausführliche Beschreibung der Erfindung

Die Erfinder haben überraschenderweise festgestellt, dass Kolophoniumharzester, die eine Alkoholkomponente (damit ist der vom entsprechenden Alkohol abgeleitete Molekülteil gemeint) mit einem hohen Molekulargewicht aufweisen, positive Eigenschaften in einer Kautschukzusammensetzung besitzen gegenüber Kolophoniumharzestern mit einer Alkoholkomponente mit einem niedrigen Molekulargewicht.

### Kautschukzusammensetzung

Im Folgenden werden die Bestandteile der erfindungsgemäßen Kautschukzusammensetzung näher beschrieben. Sämtliche Ausführungen gelten auch für den erfindungsgemäßen Reifen, bei dem wenigstens ein Bauteil zumindest teilweise aus der erfindungsgemäßen Kautschukzusammensetzung besteht sowie die erfindungsgemäße Verwendung von Kolophoniumharzester.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen Kautschuke bezogen.

### Kolophoniumharzester

Kolophoniumharz (Kolophonium) ist ein harzartiges Material, das aus vielen Pflanzen gewonnen wird, insbesondere aus Nadelbäumen wie *Pinus Sylvestris, Pinus palustris* und *Pinus caribaea.* Kolophoniumharz besteht aus einem Gemisch aus Kolophoniumharzsäuren und weiteren Komponenten in geringen Mengen. Zu den Kolophoniumharzsäuren gehören beispielsweise Abietinsäure, Neo-Abietinsäure, Dehydroabietinsäure, Pimarsäure, Levopimarsäure, Sandarakopimarsäure, Isopimarsäure und Palustrinsäure. Die Art und die relativen Mengen der im Kolophoniumharz vorhandenen Harzsäuren hängen zum Teil von der Pflanzenart und dem Verfahren der Herstellung ab und können variieren.

In einer bevorzugten Ausführungsform wird ein disproportioniertes Kolophoniumharz verwendet. Disproportioniertes Kolophoniumharz enthält hauptsächlich dehydrierte Kolophoniumharzsäuren und hydrierte Kolophoniumharzsäuren. Es wird durch Erhitzen oder Säurebehandlung aus Kolophoniumgummi hergestellt. Das Kolophoniumharz, das zur Herstellung des Kolophoniumharzesters der vorliegenden Erfindung verwendet wird, enthält vorzugsweise weniger als 5 Gew.-% Abietinsäure und/oder mehr als 30 Gew.-% Dehydroabietinsäure.

Das Kolophoniumharz, das zur Herstellung des Kolophoniumharzesters eingesetzt wird, weist eine Säurezahl von 130 bis 190 mg KOH/g auf, vorzugsweise von 140 bis 180 mg KOH/g und insbesondere 150 bis 170 mg KOH/g. Die Messung der Säurezahl erfolgt mittels DIN EN ISO 2114.

Weiterhin weist das Kolophoniumharz, das zur Herstellung des Kolophoniumharzesters eingesetzt wird, vorzugweise einen Erweichungspunkt (Ring und Kugel), gemessen mittels ASTM E 28, zwischen 50 und 100 °C, vorzugsweise zwischen 60 und 90 °C, zwischen 65 und 80 °C und insbesondere zwischen 68 und 74 °C auf.

Der Begriff "Kolophoniumharzester" bezieht sich auf den Ester eines Kolophoniumharzes als Säurekomponente mit mindestens einem Alkohol. Kolophoniumharzester können durch dem Fachmann bekannte Verfahren aus Kolophoniumharz und Alkohol hergestellt werden. Es können auch Gemische von Kolophoniumharzen eingesetzt werden, die aus verschiedenen Quellen stammen können.

Der Kolophoniumharzester wird hergestellt, in dem das Kolophoniumharz mit mindestens einem Alkohol mit einem Molekulargewicht von mindestens 200 g/mol verestert wird. Vorzugsweise weist der mindestens eine Alkohol ein Molekulargewicht von mindestens 300 g/mol, wie 380 g/mol, insbesondere von mindestens 400 g/mol auf. Der Alkohol kann ein Molekulargewicht von 200 bis 2000 g/mol, vorzugsweise 300 bis 2000 g/mol, wie 400 g/mol bis 2000 g/mol oder 400 g/mol bis 1500 g/mol aufweisen.

Fachleuten ist bekannt, dass bestimmte Alkohole molekular einheitlich herstellbar sind, während Alkohole, die durch Polymerisation hergestellt werden, polymolekular sind, d. h., aus Verteilungen von Makromolekülen mit unterschiedlichen Molmassen bestehen. Im Rahmen der vorliegenden Erfindung wird bei polymolekularen Alkoholen auf das mittlere Molekulargewicht (Zahlenmittel) Bezug genommen. Methoden zu dessen Bestimmung sind Fachleuten bekannt, wie beispielsweise DIN 53240 oder insbesondere ASTM D4274-16.

Der zur Herstellung des Kolophoniumharzesters eingesetzte mindestens eine Alkohol weist mindestens 2 Hydroxylgruppen und nicht mehr als sieben Hydroxylgruppen auf.

In einer bevorzugten Ausführungsform weist der zur Herstellung des Kolophoniumharzesters eingesetzte Alkohol 2 bis 7 Hydroxylgruppen auf.

In einer bevorzugten Ausführungsform wird bei der Herstellung des Kolophoniumharzesters ein Alkohol mit nicht mehr als 6 Hydroxylgruppen, vorzugweise nicht mehr als 4 Hydroxylgruppen, eingesetzt. In einer besonders bevorzugten Ausführungsform weist der zur Herstellung des Kolophoniumharzesters eingesetzte Alkohol 2 oder 3 Hydroxylgruppen auf.

Vorzugsweise weist der für den Kolophoniumharzester eingesetzte mindestens eine Alkohol mindestens 7 Kohlenstoffatome, vorzugsweise mindestens 8, insbesondere mindestens 15 Kohlenstoffatome auf.

In einer bevorzugten Ausführungsform weist der verwendete Alkohol keine aromatischen Gruppen auf.

In einer weiteren bevorzugten Ausführungsform besteht der verwendete Alkohol ferner nur aus Kohlenstoff, Wasserstoff und Sauerstoff.

Der zur Herstellung des Kolophoniumharzesters eingesetzte mindestens eine Alkohol kann geradkettig oder verzweigt sein, insbesondere geradkettig, und gegebenenfalls durch ein Heteroatom unterbrochen sein.

In einer Ausführungsform wird zur Herstellung des Kolophoniumharzesters nur ein Alkohol (dies schließt jedoch solche höher-molekulargewichtigen Alkohole ein, die eine gewisse Molekulargewichtsverteilung aufweisen, wie PEG 400) eingesetzt. In einer weiteren Ausführungsform werden zur Herstellung des Kolophoniumharzesters mindestens zwei verschiedene Alkohole, z.B. zwei verschiedene Alkohole eingesetzt, die dann jeweils nicht mehr als sieben Hydroxylgruppen und ein Molekulargewicht von mindestens 200 g/mol aufweisen.

In einer bevorzugten Ausführungsform weist der mindestens eine zur Herstellung des Kolophoniumharzesters eingesetzte Alkohol ein Molekulargewicht von mindestens 300 g/mol und nicht mehr als sechs Hydroxylgruppen auf.

In einer weiteren bevorzugten Ausführungsform weist der mindestens eine zur Herstellung des Kolophoniumharzesters eingesetzte Alkohol ein Molekulargewicht von mindestens 300 g/mol und nicht mehr als vier Hydroxylgruppen auf.

In einer weiteren bevorzugten Ausführungsform weist der mindestens eine zur Herstellung des Kolophoniumharzesters eingesetzte Alkohol ein Molekulargewicht von mindestens 380 g/mol und nicht mehr als vier Hydroxylgruppen auf.

In einer weiteren bevorzugten Ausführungsform wird bei der Herstellung des Kolophoniumharzesters Kolophoniumharz mit einer Säurezahl von 140 bis 180 mg KOH/g und mindestens ein Alkohol mit einem Molekulargewicht von mindestens 380 g/mol eingesetzt.

In einer weiteren bevorzugten Ausführungsform wird bei der Herstellung des Kolophoniumharzesters Kolophoniumharz mit einer Säurezahl von 140 bis 180 mg KOH/g und mindestens ein Alkohol mit einem Molekulargewicht von mindestens 380 g/mol sowie 2 oder 3 Hydroxylgruppen eingesetzt.

In einer weiteren bevorzugten Ausführungsform wird bei der Herstellung des Kolophoniumharzesters Kolophoniumharz mit einer Säurezahl von 150 bis 170 mg KOH/g und mindestens ein Alkohol mit einem Molekulargewicht von 400 g/mol bis 1500 g/mol eingesetzt.

In einer weiteren bevorzugten Ausführungsform weist der mindestens eine zur Herstellung des Kolophoniumharzesters eingesetzte Alkohol ein Molekulargewicht von mindestens 200 g/mol, 2 oder 3 Hydroxylgruppen und mindestens 7 Kohlenstoffatome auf.

In einer weiteren besonders bevorzugten Ausführungsform weist der mindestens eine zur Herstellung des Kolophoniumharzesters eingesetzte Alkohol ein Molekulargewicht von mindestens 380 g/mol und zwei oder drei Hydroxylgruppen auf.

Gemäß einer bevorzugten Ausführungsform ist der mindestens eine eingesetzte Alkohol ausgewählt aus der Gruppe bestehend aus Polyethylenglykol, wie nachstehend näher definiert, ethoxyliertem Glycerin, wie nachstehend näher definiert, ethoxyliertem Trimethylolpropan, ethoxyliertem Pentaeryrthritol oder ethoxyliertem Sorbitol.

Der mindestens eine zur Herstellung des Kolophoniumharzesters eingesetzte Alkohol kann ausgewählt sein aus der Gruppe bestehend aus C₂- bis C₄-Alkoxylat eines Polyols, Polyethylenglykol (PEG), Polypropylenglykol (PPG) und/oder Copolymer aus Ethylenoxid und Propylenoxid.

In einer Ausführungsform ist der Kolophoniumharzester aus Kolophoniumharz und mindestens einem Polyether wie Polyethylenglykol (PEG), Polypropylenglykol (PPG) und/oder Copolymer aus Ethylenoxid und Propylenoxid hergestellt. Die Copolymere aus Ethylenoxid und Propylenoxid können statistische Copolymere oder Blockcopolymere sein. Dem Fachmann ist bekannt, dass Polyether mit höheren Molmassen polymolekular sind, d. h., aus Verteilungen von Makromolekülen mit unterschiedlichen Molmassen bestehen. Es können erfindungsgemäß Polyethylenglykole, Polypropylenglykole und/oder Copolymere aus Ethylenoxid und Propylenoxid mit einem mittleren Molekulargewicht im Bereich von etwa 200 bis 1500 g/Mol verwendet werden, z.B. 200 bis 800 g/mol zur Herstellung des Kolophoniumharzesters eingesetzt werden.

In einer bevorzugten Ausführungsform ist der mindestens eine eingesetzte Alkohol ein Polyethylenglykol, vorzugsweise ein Polyethylenglykol mit einem Molekulargewicht von 200 bis 800 g/mol.

In einer weiteren bevorzugten Ausführungsform ist der mindestens eine eingesetzte Alkohol ein Polypropylenglykol, vorzugsweise ein Polypropylenenglykol mit einem Molekulargewicht von 200 bis 800 g/mol.

In einer weiteren bevorzugten Ausführungsform ist der Kolophoniumharzester aus mindestens einem statistischen Copolymer aus Ethylenoxid und Propylenoxid hergestellt, vorzugsweise mit einem Copolymer mit einem Molekulargewicht von 200 bis 800 g/mol. In einer bevorzugten Ausführungsform weist das statistische Copolymer aus Ethylenoxid und Propylenoxid einen Gehalt an Ethylenoxidgruppen von 10 bis 30 Gew.-% auf.

In einer weiteren Ausführungsform ist der Kolophoniumharzester aus mindestens einem Block-Copolymer aus Ethylenoxid und Propylenoxid mit einem Molekulargewicht von 50 bis 4500 g/mol, wie 200 bis 3000 und insbesondere 500 bis 2500 g/mol hergestellt. Gemäß einer bevorzugten Ausführungsform weist das Ethylenoxid/Propylenoxid-Blockcopolymer einen Gehalt an Ethylenoxidgruppen von 10 bis 80 Gew.-%, wie 10 bis 55 Gew.-% auf. Die Blockcopolymer können aufgebaut sein, in dem sich in der Mitte Polypropylenglykolmoleküls und an beiden Enden Polyoxyethylengruppen befinden.

Die erfindungsgemäß zu verwendenden Ethylenoxid/Propylenoxid-Blockcopolymere sind handelsübliche Verbindungen. Sie können durch die durch Umsetzung von Polypropylenglykol mit Ethylenoxid hergestellt werden. Beispiele für Ethylenoxid/Propylenoxid-Blockcopolymere sind die Pluronic PE Polymere der BASF SE, wie Pluronic PE 3100, Pluronic PE 3500, Pluronic PE 4300, Pluronic PE 6100, Pluronic PE 6120, Pluronic PE 6200, Pluronic PE 6400, Pluronic PE 6800, Pluronic PE 8100, Pluronic PE 9200, Pluronic PE 9400, Pluronic PE 10100, Pluronic PE 10300, Pluronic PE 10400 und Pluronic PE 10500.

In einer weiteren Ausführungsform ist der Kolophoniumharzester aus mindestens einem C₂- bis C₄-Alkoxylat eines Polyols hergestellt. Unter Polyolen sind solche Stoffe zu verstehen, die über mindestens zwei freie Hydroxylgruppen verfügen. Der Kohlenwasserstoffteil des Polyols ist eine Gruppe, die Kohlenstoff und Wasserstoff enthält, wobei mindestens zwei Kohlenstoffatome an eine Hydroxylgruppe gebunden sind. Sie kann geradkettig oder verzweigt sein, insbesondere geradkettig, und gegebenenfalls durch ein Heteroatom unterbrochen sein.

Ein C₂- bis C₄-Alkoxylat eines Polyols ist ein Polyol, welches mit einem C₂- bis C₄-Alkylenoxid umgesetzt wurde, wobei an einer Hydroxylgruppe des Polyols mehrere Reaktionen hintereinander stattfinden können. Beispiele von C₂- bis C₄-Alkylenoxiden sind Ethylenoxid, Propylenoxid und 1-Butenoxid. Die Umsetzung der Polyole mit dem C₂- bis C₄-Alkylenoxid erfolgt mittels gängiger Verfahren.

Es können auch gemischte C₂- bis C₄-Alkoxylate eingesetzt werden, bei denen ein Polyol unter Verwendung von einem Gemisch von C₂- bis C₄-Alkylenoxiden umgesetzt wird (Gemisch aus Ethylenoxid und Propylenoxid und/oder 1-Butylenoxid).

In einer bevorzugten Ausführungsform ist der Kolophoniumharzester aus mindestens einem Polyolalkoxylat mit bis zu 10, wie 5 bis 10, z. B. 7 Alkylenoxid-Einheiten hergestellt.

Das C₂- bis C₄-Alkoxylat eines Polyols kann ein mittleres Molekulargewicht im Bereich von etwa 200 bis 1500 g/Mol aufweisen, wie etwas 200 bis 800 g/mol, insbesondere 300 bis 500 g/mol.

In einer Ausführungsform weist das C₂- bis C₄-Alkoxylat mindestens 2 Hydroxylgruppen auf. In einer bevorzugten Ausführungsform weist das zur Herstellung des Kolophoniumharzester eingesetzte C₂- bis C₄-Alkoxylat eines Polyols zwischen 2 und 4 Hydroxylgruppen, wie 2 oder 3 Hydroxylgruppen auf.

In einer bevorzugten Ausführungsform ist der Kolophoniumharzester aus mindestens einem Polyolethoxylat mit bis zu 10, wie 5 bis 10, z. B. 7 Ethylenoxid-Einheiten (EO-Einheiten) hergestellt.

In einer weiteren bevorzugten Ausführungsform ist der Kolophoniumharzester aus mindestens einem Polyolpropoxylat mit bis zu 10 wie 5 bis 10, z. B. 7 Propylenoxid-Einheiten (PO-Einheiten) hergestellt.

Das Polyolethoxylat oder Polyolpropoxylat weist vorzugsweise zwischen 2 und 6, wie zwischen 2 und 4 Hydroxylgruppen auf.

Das Polyol des C₂- bis C₄-Alkoxylats kann ein C₂- bis C₁₅-Polyol sein. Dies bedeutet, dass das Polyol 2 bis 15 Kohlenstoffatome aufweist. Als C₂- bis C₁₅-Polyolkomponente des Alkoxylats wird vorzugsweise C₂- bis C₁₀-Polyol und insbesondere C₂- bis C₆-Polyol eingesetzt. Die Polyole weisen vorzugsweise 2 bis 8 Hydroxylgruppen auf, wie 2 bis 8 und insbesondere 2 bis 4 Hydroxylgruppen, wie 2 oder 3 Hydroxylgruppen.

Beispiele von Polyolen, die mit einem C₂- C₄-Alkylenoxid umgesetzt werden können sind Ethylenglykol, Propylenglykol, Diethylenglykol, Triethylenglykol, Tetraethylenglykol, 1,3-Propandiol, Glycerin, Pentaerythrit, Dipentaerythrit, Tripentaerythrit, Trimethylolethan, Trimethylolpropan und Mischungen davon. Vorzugsweise ist das Polyol des C₂- bis C₄-Alkoxylats ausgewählt aus der Gruppe bestehend aus Ethylenglykol, Propylenglykol, Diethylenglykol, Triethylenglykol, Tetraethylenglykol, Glycerin und Mischungen davon und ist insbesondere Glycerin.

Als Polyole, die mit einem C₂- C₄-Alkylenoxid umgesetzt werden können, können auch Zuckeralkohole wie beispielsweise Sorbitol, Maltitol, Mannitol, Xylitol und Mischungen davon verwendet werden. Dieses hat den weiteren Vorteil, dass die so produzierten Kolophoniumharzester nachhaltiger produziert werden können.

In einer weiteren besonders bevorzugten Ausführungsform ist der mindestens eine eingesetzte Alkohol ethoxyliertes Glycerin, das insbesondere bis zu 10, wie 5 bis 10, z.B. 7 Ethylenoxid-Einheiten (EO-Einheiten) aufweist. Ein solches erfindungsgemäßes Glycerin ist beispielsweise als Aduxol-Gly-07 von Schärer & Schläpfer kommerziell erhältlich.

In einer weiteren Ausführungsform ist der mindestens eine eingesetzte Alkohol ethoxyliertes Trimethylolpropan, ethoxyliertes Pentaeryrthritol oder ethoxyliertes Sorbitol.

In einer alternativen Ausführungsform umfasst bzw. ist der mindestens eine eingesetzte Alkohol (mit dem das Kolophoniumharz verestert wird) das Umsetzungsprodukt von C₂ bis C₄-Alkylenoxid mit mindestens einem Monoalkohol, wobei dieses dann mindestens 2, vorzugsweise mindestens 2 bis 30, insbesondere 6 bis 12 von C₂- bis C₄-Alkylenoxid abgeleitete Einheiten (kurz auch nur: "C₂- bis C₄-Alkylenoxid-Einheiten"), vorzugsweise Ethylenoxid-Einheiten Propylenoxid-Einheiten und/oder Butylenoxid-Einheiten aufweist. Vorzugsweise ist der mindestens eine Monoalkohol ein Kohlenwasserstoffalkohol mit einer gesättigten oder ungesättigten C₈- bis C₂₄-Kohlenwassstoffgruppe, insbesondere C₁₂- bis C₁₈-Kohlenwassstoffgruppe. Falls als Monoalkohol sogenannte Fettalkohole aus natürlichen Quellen verwendet werden, liegen dies häufig als Mischungen vor.

In einer alternativen Ausführungsform kann das Kolophoniumharz auch mit dem Umsetzungsprodukt von C₂- bis C₄-Alkylenoxid mit mindestens einer Carbonsäure umgesetzt werden. In diesem Fall wird das Kolophoniumharz mit der aus der Alkylenoxid-Umsetzung entstehenden freien Hydroxylgruppe verestert. Vorzugsweise weist das Umsetzungsprodukt mindestens 2, vorzugsweise mindestens 2 bis 30, insbesondere 6 bis 12 von C₂- bis C₄-Alkylenoxid abgeleitete Einheiten, insbesondere Ethylenoxid-Einheiten, Propylenoxid-Einheiten und/oder Butylenoxid-Einheiten auf.

Vorzugsweise ist die mindestens eine Carbonsäure eine C₈- bis C₂₄-Carbonsäure, insbesondere C₁₂- bis C₁₈-Carbonsäure. Falls als Carbonsäure sogenannte Fettsäuren aus natürlichen Quellen verwendet werden, liegen dies häufig als Mischungen vor. Beispiele sind Rizinusöl (Öl-, Linol-, Linolen- und Palmitinsäuren) oder Kokosöl (Öl-, Linol-, Linolen-, Palmitin-, Laurin- und - Myristinsäuren).

Die vorstehend zur Herstellung der erfindungsgemäßen Kolophoniumharzester eingesetzten Alkoholkomponenten sind im allgemeinen wasserlöslich, d. h., es lösen sich bei Standardbedingungen (Normaldruck (etwa 1 bar) und Raumtemperatur (etwa 20 °C)) mindestens 1 g in 100 ml Wasser.

Der Kolophoniumharzester kann hergestellt werden, indem Kolophoniumharz und Alkohol zusammen mit Säure erhitzt werden. Als Säuren können beispielsweise hypophosphorige Säure oder ein Gemisch aus hypophosphoriger Säure und p-Toluolsulfonsäure eingesetzt werden.

Das Molekulargewicht des Kolophoniumharzesters beträgt vorzugsweise mindestens 450 g/mol, insbesondere 500 bis 2000 g/mol. Das Molekulargewicht des Kolophoniumharzesters kann mittels Gelpermeationschromatographie mit einem Differentialrefraktometer bestimmt werden.

Weiterhin kann der Kolophoniumharzester eine dynamischen Viskosität bei 20 °C von 2000 bis 60000 mPa s, vorzugsweise von 2500 bis 5000 mPa s und insbesondere von 3000 bis 4500 mPa s aufweisen.

In einer bevorzugten Ausführungsform ist der erfindungsgemäße Kolophoniumharzester bei Standardbedingungen (Normaldruck (etwa 1 bar) und Raumtemperatur (etwa 20 °C)) flüssig.

### Kautschukadditiv

Die erfindungsgemäße Kautschukzusammensetzung enthält mindestens ein Kautschukadditiv, das den erfindungsgemäßen Kolophoniumharzester wie oben ausführlich beschrieben umfasst. In einer Ausführungsform kann das Kautschukadditiv aus dem Kolophoniumharzester bestehen. Alternativ enthält das Kautschukadditiv mindestens 50 Gew.-%, vorzugsweise mindestens 70 Gew.-%, insbesondere mindestens 90 Gew.-% Kolophoniumharzester.

Neben dem Kolophoniumharzester kann das Kautschukadditiv auch noch weitere Bestandteile aufweisen. In einer bevorzugten Ausführungsform enthält das Kautschukadditiv Fettsäureester und/oder Fettsäureseifen, insbesondere Zink- und/oder Kaliumfettsäureseifen.

Die Kautschukadditive der vorliegenden Erfindung können vorzugweise in einer Abmischung vorliegen, die ein oder mehrere feste Trägermaterialien und einen oder mehrere Kolophoniumharzester enthält. Als Trägermaterial können vorzugsweise anorganische Füllstoffe (wie beispielsweise Kieselsäuren) oder wachsartige Materialien (wie beispielsweise Polyethylenwachse) verwendet wird.

In einer bevorzugten Variante wird als Trägermaterial eine Kieselsäure verwendet. Beispiele von kommerziell erhältlichen Kieselsäuren, die in der Abmischung der vorliegenden Erfindung verwendet werden können, sind Sipernat 22 und Sipernat 50 von Evonik.

Das Gewichtsverhältnis von Trägermaterial zu Kolophoniumharzester in der Abmischung beträgt beispielsweise 10/90 bis 90/10, bevorzugter 20/80 bis 80/20 und besonders bevorzugt etwa 30/70 oder 33/67.

Der Einsatz einer Abmischung erleichtert insbesondere die Handhabung der Kolophoniumharzester, wenn diese bei Raumtemperatur flüssig sind.

### Kautschuk

Die erfindungsgemäße Kautschukzusammensetzung enthält mindestens einen Kautschuk.

In einer bevorzugten Ausführungsform ist der Kautschuk ein mittels Schwefelvernetzung vernetzbarer Kautschuk. Erfindungsgemäß werden Kautschuke verwendet, die insbesondere zur Herstellung von Laufstreifenmischungen geeignet sind, die in der Produktion von Reifen eingesetzt werden können.

Bevorzugte Kautschuke sind Dienkautschuke. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen. Bevorzugte Dienkautschuk sind Butadien-Kautschuk, Polyisopren und Styrol-Butadien-Kautschuk.

In einer bevorzugten Ausführungsform umfasst die Kautschukzusammensetzung mindestens einen Styrol-Butadien-Kautschuk, Naturkautschuk, Polyisopren und/oder Butadien-Kautschuk sowie gegebenenfalls deren funktionalisierte Formen.

In einer bevorzugten Ausführungsform enthält die Kautschukzusammensetzung mindestens einen Styrol-Butadien-Kautschuk (Styrol-Butadien-Copolymer). Hierbei kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Das oder die eingesetzte(n) Styrol-Butadien-Copolymere kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan- und/oder Carboxy-Gruppen und/oder Phthalocyanin-Gruppen und/oder Silan-Sulfid-Gruppen handeln. Es kommen aber auch weitere der fachkundigen Person bekannte Modifizierungen, auch als Funktionalisierungen bezeichnet, in Frage. Bestandteil solcher Funktionalisierungen können Metallatome sein.

Gemäß einer bevorzugten Ausführungsform enthält die Kautschukzusammensetzung mindestens einen Styrol-Butadien-Kautschuk, bevorzugt in Mengen von 40 bis 100 phr, besonders bevorzugt 70 bis 90 phr.

Gemäß einer bevorzugten Ausführungsform enthält die Kautschukzusammensetzung mindestens einen Styrol-Butadien-Kautschuk, der an den Polymerkettenenden und/oder entlang der Polymerketten (engl. "back bone functionalized") mit wenigstens einer der oben genannten Gruppen funktionalisiert ist. Besonders bevorzugt handelt es sich bei den funktionellen Gruppen um solche Gruppen, die an Kieselsäure anbinden können, wie insbesondere Hydroxy-Gruppen und/oder Ethoxy-Gruppen und/oder Epoxy-Gruppen und/oder Siloxan-Gruppen und/oder Aminosiloxan- und/oder Carboxy-Gruppen und/oder Silan-Sulfid-Gruppen.

Bei dem Butadien-Kautschuk (= BR, Polybutadien) kann es sich um alle dem Fachmann bekannten Typen handeln. Darunter fallen u. a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%.

Das eingesetzte Polybutadien kann endgruppenmodifiziert und/oder entlang der Polymerketten funktionalisiert sein. Es sei dazu auf die obigen im Zusammenhang mit der Modifizierung und Funktionalisierung von Styrol-Butadien-Kautschuk offenbarten Möglichkeiten verwiesen, gegebenenfalls angepasst an die Erfordernisse von BR als Kautschukmaterial.

Gemäß einer bevorzugten Ausführungsform enthält die Kautschukzusammensetzung 5 bis 50 phr, vorzugsweise 10 bis 30 phr, mindestens eines Butadien-Kautschuks.

Die erfindungsgemäße Kautschukzusammensetzung kann auch natürliches und/oder synthetisches Polyisopren enthalten. Hierbei kann sowohl cis-1,4-Polyisopren als auch 3,4-Polyisopren eingesetzt werden. Vorzugweise enthält die Kautschukzusammensetzung cis-1,4-Polyisoprenen mit einem cis-1,4-Anteil von mehr als 90 Gew.-%. Bei Naturkautschuk handelt es sich um einen Kautschuk mit einem hohen cis-1,4-Anteil. Auch das eingesetzte Polyisopren endgruppenmodifiziert und/oder entlang der Polymerketten funktionalisiert sein. Es sei dazu auf die obigen im Zusammenhang mit der Modifizierung und Funktionalisierung von Styrol-Butadien-Kautschuk offenbarten Möglichkeiten verwiesen, gegebenenfalls angepasst an die Erfordernisse von Polyisopren als Kautschukmaterial.

Die genannten Kautschuke können auch in Kombination miteinander in der Kautschukzusammensetzung enthalten sein.

In einer bevorzugten Ausführungsform umfasst die Kautschukzusammensetzung mindestens einen Styrol-Butadien-Kautschuk und mindestens einen Butadien-Kautschuk, insbesondere 5 bis 40 phr Butadien-Kautschuk und 40 bis 100 phr Styrol-Butadien-Kautschuk.

In einer bevorzugten Ausführungsform umfasst die Kautschukzusammensetzung mindestens ein flüssiges Polymer (viskose Flüssigkeiten bei Normaltemperatur) wie beispielsweise LIR (flüssiges Polyisopren), LBR (flüssiges Polybutadien) und L-SBR (flüssiges Styrol-Butadien).

Als flüssiges Polyisopren kann beispielsweise Kurapren LIR30 und Kurapren LIR50 von Kuraray Co., Ltd. eingesetzt werden. Als flüssiges Polybutadien kann beispielsweise LBR-302, LBR-307, LBR-305 LBR-352 oder LBR-361 von Kuraray Co., Ltd. eingesetzt werden. Als flüssiges Styrol-Butadien kann beispielsweise L-SBR-820 oder L-SBR-841 von Kuraray Co., Ltd.

Ferner kann den erfindungsgemäßen Kautschukzusammensetzungen auch ölverstreckter Kautschuk zugesetzt werden. In Bezug auf die eingesetzten Mengen an ölverstrecktem Kautschuk ist es üblich, dabei den Ölanteil mit "einzuwiegen", so dass es dadurch zu Rezepturen mit "Kautschuk"-Mengen von über 100 phr, wie **z.** B. bis 200 phr, z. B. im Bereich 40 oder 70 bis 140 oder 150 phr, kommen kann. Da der Ölanteil üblicherweise bekannt ist, kann ölverstreckter Kautschuk jedoch so zugesetzt werden, dass die Summe der festen Kautschukkomponenten (vgl. die obige Definition unter "Kautschukzusammensetzung") so ist, dass insgesamt 100 Gewichtsteile Kautschuk vorliegen.

Zusätzlich kann die erfindungsgemäße Kautschukzusammensetzung weitere Kautschuke in vergleichsweise geringen Mengen, wie 0,1 bis 50 phr enthalten.

### Weitere Additive

Die Kautschukzusammensetzung der vorliegenden Erfindung kann weitere Additive und Bestandteile enthalten, insbesondere einen oder mehrere Füllstoffe, einen oder mehrere Katalysatoren oder Aktivatoren für eine Schwefelvernetzung und gegebenenfalls weitere Zuschlagstoffe wie Alterungsschutzmittel und Homogenisatoren in üblichen Mengen.

In einer bevorzugten Ausführungsform enthält die Kautschukzusammensetzung der vorliegenden Erfindung weitere Additive und Bestandteile, die für die Herstellung von Laufstreifenmischungen für Reifen geeignet sind.

Bevorzugt enthält die Kautschukzusammensetzung mindestens einen Füllstoff. Die Kautschukzusammensetzung kann 5 bis 300 phr, bevorzugt 30 bis 300 phr, insbesondere 50 bis 200 phr wenigstens eines Füllstoffs enthalten, wobei die Gesamtmenge an allen enthaltenen Füllstoffen gemeint ist.

Gemäß einer bevorzugten Ausführungsform der Erfindung beträgt der Gesamtfüllstoffgehalt 30 bis 150 phr, besonders bevorzugt 60 bis 140 phr, wiederum bevorzugt 80 bis 130 phr, wiederum besonders bevorzugt 100 bis 130 phr und wiederum ganz besonders bevorzugt 110 bis 130 phr.

Hierbei kann es sich um alle dem Fachmann bekannten Füllstoffe handeln, wie Ruß, Kohlenstoffnanoröhrchen, Kieselsäure, Alumosilicate, Schichtsilicate wie Kaolin, Calciumcarbonat (Kreide), Stärke, Calciumcarbonat, Bariumsulfat, Magnesiumoxide, Aluminiumoxide, Titandioxid, oder Kautschukgele.

Bevorzugt enthält die Kautschukzusammensetzung wenigstens eine Kieselsäure als Füllstoff. Bei den Kieselsäuren kann es sich um die dem Fachmann bekannten Kieselsäuren, die als Füllstoff für Kautschukzusammensetzungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277) von 35 bis 350 m²/g, bevorzugt von 35 bis 260 m²/g, besonders bevorzugt von 100 bis 260 m²/g und ganz besonders bevorzugt von 115 bis 235 m²/g, und eine CTAB-Oberfläche (gemäß ASTM D 3765) von 30 bis 400 m²/g, bevorzugt von 30 bis 250 m²/g, besonders bevorzugt von 80 bis 250 m²/g und ganz besonders bevorzugt von 80 bis 230 m²/g, aufweist.

Als Kieselsäuren können somit z. B. sowohl jene des Typs Ultrasil^{®} 7000 GR (Handelsname) der Firma Evonik, sowie Ultrasil^{®} VN3 (Handelsname) der Firma Evonik als auch hoch dispergierbare Kieselsäuren, so genannte HD-Kieselsäuren (z. B. Zeosil^{®} 1165 MP der Firma Solvay), zum Einsatz kommen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Hierbei können ein oder mehrere verschiedene Silan-Kupplungsagenzien in Kombination miteinander eingesetzt werden. Die Kautschukmischung kann somit ein Gemisch verschiedener Silane enthalten. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann.

Weiterhin ist es vorteilhaft, wenn die erfindungsgemäße Kautschukzusammensetzung wenigstens einen Weichmacher enthält, wobei die Gesamtmenge an Weichmacher bevorzugt 5 bis 100 phr beträgt. Zu den im Rahmen der vorliegenden Erfindung verwendeten Weichmachern gehören alle dem Fachmann bekannten Weichmacher wie aromatische, naphthenische oder paraffinische Mineralölweichmacher, wie z. B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Faktisse oder Weichmacherharze. Die Kautschukzusammensetzung kann 5 bis 40 phr, bevorzugt 10 bis 30 phr Weichmacher enthalten.

Die Kautschukzusammensetzung enthält vorzugsweise ferner für die Vernetzung benötigte Substanzen wie Zinkoxid, Beschleuniger und/oder Schwefel.

Es ist insbesondere vorteilhaft, wenn die erfindungsgemäße Kautschukzusammensetzung Zinkoxid bzw. zinkhaltige Verbindungen für die Aktivierung der Schwefelvulkanisation enthält.

Die Vulkanisation der Kautschukzusammensetzung wird ggf. in Anwesenheit von Schwefel und/oder Schwefelspendern und mit Hilfe von Vulkanisationsbeschleunigern durchgeführt, wobei einige Vulkanisationsbeschleuniger zugleich als Schwefelspender wirken können und Schwefel und/oder Schwefelspender sowie Vulkanisationsbeschleuniger in den im Stand der Technik bekannten Mengen eingesetzt werden. Schwefel und/oder Schwefelspender sowie ein oder mehrere Beschleuniger werden im letzten Mischungsschritt in den genannten Mengen der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern. Bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder 2,2'-Dibenzothiazyldisulfid (MBTS) und/oder N-tert.Butyl-2-benzothiazylsulfenamid (TBBS).

Es können auch mehrere Beschleuniger eingesetzt werden. Bevorzugt wird ein Sulfenamidbeschleuniger, besonders bevorzugt CBS, in Kombination mit dem Guanidin-Beschleuniger DPG (Diphenylguanidin) eingesetzt. Die Menge an DPG beträgt dabei 0 bis 5 phr, vorzugsweise 0,1 bis 3 phr, besonders bevorzugt 0,5 bis 2,5 phr, ganz besonders bevorzugt 1 bis 2,5 phr.

Des Weiteren kann die Kautschukzusammensetzung übliche Zusatzstoffe in üblichen Gewichtsteilen enthalten. Die Zusatzstoffe können ausgewählt sein aus der Liste bestehend aus Alterungsschutzmittel, Aktivatoren, Wachse, Harze, Mastikationshilfsmittel und Verarbeitungshilfsmittel und Mischungen davon.

Als Alterungsschutzmittel können beispielsweise N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD) und 2,2,4-Trimethyl-1,2-dihydrochinolin (TMQ)eingesetzt werden. Die erfindungsgemäße Kautschukzusammensetzung umfasst vorzugweise 0,1 bis 3 phr Alterungsschutzmittel.

Als Aktivatoren können beispielsweise Zinkoxid und Fettsäuren (z. B. Stearinsäure) oder Zinkkomplexe wie z. B. Zinkethylhexanoat. eingesetzt werden. Die erfindungsgemäße Kautschukzusammensetzung umfasst vorzugweise 0,5 - 10 phr, vorzugsweise 2 - 5 phr Aktivatoren.

Die erfindungsgemäße Kautschukzusammensetzung umfasst vorzugweise 0,1 - 3 phr Wachse.

Als Harze können insbesondere Weichmacherharze, wie z. B. C₅-Petroleumharz, C₉-Petroleumharz, Terpenharz, Cumaronindenharz oder einem Kohlenwasserstoffharz aus alpha-Methylstyrol und Styrol (AMS-Harz) eingesetzt werden. Die erfindungsgemäße Kautschukzusammensetzung umfasst vorzugweise 5 bis 100 phr, vorzugsweise 15 bis 50 phr Harze.

Als Mastikationshilfsmittel kann beispielsweise 2,2'-Dibenzamidodiphenyldisulfid (DBD) eingesetzt werden. Die erfindungsgemäße Kautschukzusammensetzung umfasst vorzugsweise 0,1 bis 3 phr Mastikationshilfsmittel.

Als Verarbeitungshilfsmittel können beispielsweise Fettsäuresalze, wie z. B. Zinkseifen, und Fettsäureester und deren Derivate zum Einsatz kommen. Die erfindungsgemäße Kautschukzusammensetzung umfasst vorzugsweise 0,5 bis 10 phr, vorzugsweise 2 bis 5 phr Verarbeitungshilfsmittel.

Insbesondere enthält die Kautschukzusammensetzung
a) 0,1 bis 3 phr Alterungsschutzmittel,
b) 0,5 bis 10 phr, vorzugsweise 2 bis 5 phr Aktivatoren,
c) 0,1 bis 3 phr Wachse,
d) 5 bis 100 phr, vorzugsweise 15 bis 50 phr Harze,
e) 0,1 bis 3 phr Mastikationshilfsmittel, und
f) 0,5 bis 10 phr, vorzugsweise 2 bis 5 phr Verarbeitungshilfsmittel.

Der Mengenanteil der Gesamtmenge an weiteren Zusatzstoffen beträgt 3 bis 150 phr, bevorzugt 3 bis 100 phr und besonders bevorzugt 5 bis 80 phr.

### Zusammensetzung

Die Kautschukzusammensetzung enthält vorzugsweise zwischen 0,1 bis 40 phr erfindungsgemäßen Kolophoniumharzester, vorzugsweise 1 bis 30 phr.

In einer bevorzugten Ausführungsform weist die Zusammensetzung nach der Vulkanisation einen mindestens 5 %, vorzugsweise 10 %, insbesondere 15 % niedrigeren Rollwiderstand, tan delta bei 60 °C, und/oder eine 5 %, vorzugsweise 10 %, insbesondere 15 % höhere Nasshaftung, tan delta bei 0 °C auf.

Weiterhin weist die Zusammensetzung vorzugsweise eine verbesserte Verarbeitbarkeit auf, insbesondere eine um mindestens 5 %, vorzugsweise 10 %, insbesondere 15 % niedrigere Mooney-Viskosität und/oder einen entsprechend niedrigeren Garvey Die-Materialdruck.

Weiterhin weist die Zusammensetzung vorzugsweise eine verbesserte Steifigkeit auf, insbesondere eine um mindestens 5 %, vorzugsweise 10 %, insbesondere 15 % höhere Reißfestigkeit und/oder Reißdehnung und/oder Zugfestigkeit Modul 100 % und/oder Zugfestigkeit Modul 300 %.

Die oben genannten Verbesserungen (niedrigerer Rollwiderstand, höhere Nasshaftung, verbesserte Verarbeitbarkeit, erhöhte Steifigkeit) können im Vergleich zu einer identischen Zusammensetzung, die statt des erfindungsgemäßen Additivs ein aus dem Stand der Technik bekanntes Kautschukadditiv in identischer Menge umfasst, auftreten. Als bekanntes (Vergleichs-)Kautschukadditiv können kommerziell erhältliche Kautschukadditive, wie Novares C 10 eingesetzt werden. Zur Überprüfung werden zwei ansonsten identische Kautschukzusammensetzungen hergestellt und deren Eigenschaften anschließend miteinander verglichen.

Die oben genannten Verbesserungen können auch im Vergleich zu einer identischen Zusammensetzung bestimmt werden, die das erfindungsgemäße Kautschukadditiv nicht enthält. Zur Überprüfung werden in diesem Fall zwei identische Kautschukzusammensetzungen hergestellt und zu einer von ihnen zusätzlich das erfindungsgemäße Kautschukadditiv hinzugegeben. Anschließend werden die Eigenschaften der beiden Kautschukzusammensetzungen miteinander verglichen.

Vorzugsweise ist die Kautschukzusammensetzung für die Herstellung von Laufstreifenmischungen für Reifen geeignet. Die erfindungsgemäße Kautschukzusammensetzung ist ferner auch für Laufstreifen geeignet, die aus verschiedenen nebeneinander und/oder untereinander angeordneten Laufstreifenmischungen bestehen (Multikomponentenlaufstreifen).

### Herstellung

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in einer oder mehreren Mischstufen hergestellt und im Anschluss durch Zugabe des Vulkanisationssystems die Fertigmischung erzeugt wird.

Anschließend kann die Mischung weiterverarbeitet werden, z. B. durch einen Extrusionsvorgang, und in die entsprechende Form, z. B. die Form eines Laufstreifenrohlings, gebracht werden.

Das allgemeine Verfahren zur Herstellung von Kautschukmischungen und deren Vulkanisate ist in "Rubber Technology Handbook", W. Hofmann, Hanser Verlag 1994 beschrieben. Dem Fachmann ist bekannt, dass ggf. je nach Mischung, insbesondere je nach Füllstoffgehalt, weitere Mischstufen nach der ersten Grundmischstufe durchzuführen sind, um eine bessere Absenkung der Viskosität und eine bessere Homogenisierung zu erreichen.

### Reifen

Die vorliegende Erfindung betrifft auch Reifen, bei denen wenigstens ein Bauteil zumindest teilweise aus einer erfindungsgemäßen Kautschukzusammensetzung hergestellt wurde. Vorzugsweise ist der Reifen ein Ultra High Performance (UHP)- oder Sommerreifen.

Unter Reifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Gemäß einer bevorzugten Ausführungsform der Erfindung weist der Reifen die erfindungsgemäße Kautschukzusammensetzung wenigstens im Laufstreifen auf.

Die vorliegende Erfindung betrifft weiterhin ein Verfahren zur Herstellung eines Reifens, wobei ein oder mehrere Bauteile des Reifens aus der erfindungsgemäßen Kautschukzusammensetzung hergestellt werden und die Kautschukzusammensetzung ausgehärtet wird.

Die Verwendung der erfindungsgemäßen Kautschukzusammensetzung kann das Verfahren zur Herstellung von Reifen und Laufstreifen wesentlich verbessern.

### Verwendung

Die vorliegende Erfindung betrifft weiterhin die Verwendung von Kolophoniumharzester aus Kolophoniumharz und mindestens einem Alkohol als Kautschukadditiv in einer Kautschukzusammensetzung zur Verbesserung der Mooney-Viskosität der Kautschukzusammensetzung und/oder zur Verbesserung von mindestens einem von Abrieb, Haftung und Rollwiderstand eines aus der Kautschukzusammensetzung hergestellten Reifens, wobei das eingesetzte Kolophoniumharz eine Säurezahl von 130 bis 190 mg KOH/g aufweist und der bzw. die eingesetzte(n) Alkohol(e) ein Molekulargewicht von mindestens 200 g/mol und nicht mehr als sieben Hydroxylgruppen aufweist bzw. aufweisen.

In einer bevorzugten Ausführungsform wird mindestens eine der genannten Eigenschaften um mindestens 5 %, vorzugsweise mindestens 10 % verbessert gegenüber einer Kautschukzusammensetzung, die stattdessen ein bekanntes Kautschukadditiv in identischer Menge umfasst. Als bekanntes (Vergleichs-)Kautschukadditiv können kommerziell erhältliche Kautschukadditive, wie beispielsweise Novares C 10 eingesetzt werden.

Das erfindungsgemäße Kautschukadditiv kann insbesondere in einer Kautschukzusammensetzung für Laufstreifen verwendet werden.

In einer bevorzugten Ausführungsform wird bei der erfindungsgemäßen Verwendung eine Abmischung eingesetzt, die
a) ein oder mehrere feste Trägermaterialien,
b) einen oder mehrere erfindungsgemäße Kolophoniumharzester enthält.

Als Trägermaterial können vorzugsweise anorganische Füllstoffe (wie beispielsweis Kieselsäuren) oder wachsartige Materialien (wie beispielsweise Polyethylenwachse) verwendet werden. In einer bevorzugten Ausführungsform wird als Trägermaterial eine Kieselsäure verwendet.

Das Gewichtsverhältnis von Trägermaterial zu Kolophoniumharzester in der Abmischung beträgt beispielsweise 10/90 bis 90/10, bevorzugter 20/80 bis 80/20 und besonders bevorzugt etwa 30/70 oder 33/67.

### Ausführungsbeispiele

Die Erfindung soll nun anhand von Vergleichs- und Ausführungsbeispielen näher erläutert werden, ohne jedoch auf diese Beispiele beschränkt zu sein.

### Beispiel 1 - Herstellung der Kautschukadditive

### a) Veresterung von Kolophonium mit ethoxyliertem Glycerin (Additiv A)

369,0 g ethoxyliertes Glycerin (Aduxol GLY-07 von Schärer + Schläpfer) und 1,4 g hypophosphorige Säure wurden unter Stickstoffatmosphäre vorgelegt und die Mischung auf 100 °C erhitzt. Anschließend wurden insgesamt 473,1 g Kolophoniumharz (Gresinox 578 M von DRT, Säurezahl 160 mg KOH/g) portionsweise hinzugegeben und die Mischung langsam auf 220 °C erhitzt und Vakuum angelegt. Der Reaktionsverlauf wurde mittels Messung der Säurezahl kontrolliert. Es wurde eine bei Raumtemperatur viskose Flüssigkeit erhalten mit einem Stockpunkt bei ca. 0 °C, gemessen gemäß DIN EN SO 3016.

### b) Veresterung von Kolophonium mit ethoxyliertem Glycerin (Additiv B)

4000 g ethoxyliertes Glycerin (Aduxol GLY-07 von Schärer + Schläpfer), 9,2 g hypophosphorige Säure, 4,14 g Paratoluolsulfonsäure und 5190 g Kolophoniumharz (Gresinox 578 M von DRT) wurden unter Stickstoffatmosphäre zusammengegeben, die Mischung langsam auf 245 °C erhitzt und Vakuum angelegt. Der Reaktionsverlauf wurde mittels Messung der Säurezahl kontrolliert. Es wurde eine bei Raumtemperatur viskose Flüssigkeit erhalten mit einem Stockpunkt bei 12 °C. Die Dichte bei 20 °C beträgt 1100 kg/m³.

### c) Veresterung von Kolophonium mit Polyethlyenglykol 400 (Additiv C)

In einem weiteren Ansatz wurden 332,23 g Kolophoniumharz (Gresinox 578 M von DRT) und 385,07 g Polyethylenglykol 400 (Carbowax PEG 400DE von DOW Chemical Company) mit Hilfe von Zinkoxid als Katalysator verestert. Die dynamische Viskosität des erhaltenen Esters bei 20 °C beträgt 3.700 mPa.

### Beispiel 2 - Herstellung der Kautschukzusammensetzung

Die Mischungsherstellung erfolgte unter üblichen Bedingungen in einer oder mehreren Mischstufen. Anschließend wird diese weiterverarbeitet, z. B. durch einen Extrusionsvorgang, und in die entsprechende Form gebracht. Die verschiedenen Komponenten der einzelnen Mischungen sind in den unten aufgeführten Tabellen angegeben.

**Tabelle 1**

| **Komponente** | **Chemische Klasse** | **Eigenschaften** |
|---|---|---|
| Sprintan SLR 3402 | Styrol Butadien Kautschuk | Glasübergangstemperatur -62 °C |
| Sprintan 918S | Styrol Butadien Kautschuk | Glasübergangstemperatur -33 °C |
| Buna CB 24 | Butadiene Kautschuk | Neodymium BR, Mooney Viskosität 44 MU, Cis 1,4 Gehalt = 96 % |
| Ultrasil 7000 GR | Kieselsäure | CTAB -Oberfläche = 160 m2/g |
| Zeosil Premium 200 MP | Kieselsäure | CTAB -Oberfläche = 200 m2/g |
| Struktol SCA 985 | Bis(triethoxysilylpropyl) disulfid | Silan |
| Luvomaxx BC N-330 | Ruß | Iodadsorptionszahl: 82±5 [g/kg] |
| Novares C 10 | Coumaronindenharz | Erweichungspunkt 10 °C |
| Pinerez 7024 | Harz | Triethyleneglycolester von Kolophoniumharz |
| Struktol EF44 | Mischung aus Fettsäurederivaten, hauptsächlich Zinkseifen | Verarbeitungshilfsmittel |
| Tudalen 4192 | Prozessöl | Weichmacher |
| Varazon 5998 | Wachs | Antizonant |
| ZnO Harzsiegel GR | Zinkoxid | Aktivator |
| 6PPD | N-(1,3-dimethylbutyl)-*N'-*phenyl-1,4-benzenediamine | Alterungsschutzmittel |
| TBBS | N-tert-butyl-2-benzothiazyl sulfenamid | Beschleuniger |
| CBS | N-cyclohexyl-2- benzothiazole sulfenamid | Beschleuniger |
| DPG | 1,3-Diphenylguanidine | Beschleuniger |

Bei sämtlichen in der Tabelle enthaltenen Mischungsbeispielen sind die angegebenen Mengenangaben (Gewichtsteile) auf 100 Gewichtsteile Gesamtkautschuk bezogen (phr).

Aus sämtlichen Mischungen wurden Prüfkörper hergestellt und mit diesen Prüfkörpern für die Kautschukindustrie typische Materialeigenschaften mit den im Folgenden angegebenen Testverfahren ermittelt:
- Mooney-Viskosität (MS 1+4, 100 °C), nach jeder Mischstufe und nach Alterung, jeweils gemäß DIN EN ISO 289-1
- Extrusionsparameter (Extrusionsgeschwindigkeit, Spritzquellung, Extrusionsrate, Materialdruck, Materialtemperatur) Oberflächenbeurteilung (Garvey Die: Oberfläche A-E mit A als Bestnote, Kanten 1-10 mit 10 als Bestnote), jeweils gemäß ASTM D 2230.
- Rückprallelastizität bei RT, gemessen gemäß ASTM D-8059
- Shore-A-Härte bei Raumtemperatur (RT), gemessen gemäß DIN EN ISO 868,
- Reißfestigkeit, Reißdehnung und Zugfestigkeit gemessen gemäß DIN 53 504, Parameter für Steifigkeit, auch für Reifenabrieb
- Spannungswerte bei 100 und 300 % Dehnung bei Raumtemperatur (Modul 100 %, Modul 300 %), gemäß DIN 53 504
- Verlustfaktor Tan delta bei 0 °C und 60 °C gemäß DIN 53 545
   ∘ Dynamische mechanische Analyse, wobei das vulkanisierte Material eingespannt und dynamisch belastet wird
   ∘ Nasshaftung ist mit dem tan delta bei 0°C korrelierbar (je größer der tan delta bei 0 °C, desto besser die Nasshaftung),
   ∘ Rollwiderstand ist mit dem tan delta bei 60°C korrelierbar (je kleiner der tan delta bei 60 °C, desto niedriger ist der Rollwiderstand),
- Rückprall gemäß DIN 53512

### Beispiel 3 - Vergleich mit Struktol EF44

Die erfindungsgemäßen Kautschukzusammensetzungen wurden vergleichend mit in der Reifenindustrie etablierte Additive getestet. Hierbei wurde eine Kautschukzusammensetzung, die das in Beispiel 1 b) hergestellte Additiv B (Ester aus Kolophoniumharzsäure und ethoxyliertem Glycerin) enthält (Zusammensetzung C), verglichen mit einer Kautschukzusammensetzung, die das kommerziell erhältliche Additiv Struktol EF44 (Mischung aus Fettsäurederivaten, hauptsächlich Zinkseifen, Schill+Seilacher "Struktol" GmbH) enthält (Zusammensetzung B) und einer Kautschukzusammensetzung, die keines der beiden Additive enthält (Zusammensetzung A).

Wie aus der unten angeführten Tabelle ersichtlich, weist die erfindungsgemäße Kautschukzusammensetzung C gegenüber der Vergleichszusammensetzung B Vorteile im Bereich Reifenhandling (= höhere Steifigkeit) und Reifenhaftung, bei vergleichbar guter Verarbeitbarkeit der Kautschukzusammensetzung und gleichem Reifenabrieb, bei höherem Rollwiderstand auf.

Mit diesen Ergebnissen sind die erfindungsgemäßen Additive speziell für Ultra High Performance (UHP)- und Sommerreifen geeignet. Gleichzeitig bleiben die übrigen Eigenschaften auf gleichem Niveau und werden nicht signifikant verschlechtert oder sogar teilweise verbessert.

**Tabelle 2**

| **Zusammensetzung** | **A** | **B** | **C** |
|---|---|---|---|
| Sprintan SLR 3402 | 80,00 | 80,00 | 80,00 |
| Buna CB 24 | 20,00 | 20,00 | 20,00 |
| Ultrasil 7000 GR | 100,00 | 100,00 | 100,00 |
| Struktol SCA 985 | 8,00 | 8,00 | 8,00 |
| Luvomaxx BC N-330 | 8,00 | 8,00 | 8,00 |
| Tudalen 4192 (TDAE oil) | 25,00 | 25,00 | 25,00 |
| ZnO Harzsiegel GR | 2,50 | 2,50 | 2,50 |
| Varazon 5998 | 1,50 | 1,50 | 1,50 |
| Stearinsäure | 1,00 | 1,00 | 1,00 |
| Richon 6PPD | 2,00 | 2,00 | 2,00 |
| Schwefel | 1,40 | 1,40 | 1,40 |
| Double Vigour CBS-G | 1,70 | 1,70 | 1,70 |
| Double Vigour DPG-C | 2,00 | 2,00 | 2,00 |
| Struktol EF 44 | | 3,00 | |
| Additiv B | | | 3,00 |
| | | | |

| **Verarbeitbarkeit** | | | |
|---|---|---|---|
| 1.Mischstufe: Mooney MS [1+4] 100 °C [MU] | 84 | 70 | 76 |
| Walzenverhalten [1=sticky; 5=bagging] | 2 | 4 | 4 |
| 2.Mischstufe: Mooney MS [1+4] 100 °C [MU] | 61 | 52 | 54 |
| Garvey Die, 60 rpm/min material pressure [bar] | 81 | 67 | 71 |
| | | | |

| **Reifenabrieb, Handling** | | | |
|---|---|---|---|
| 1.Mischstufe: G' bei 0,98 % Zug [kPa] | 2351 | 906 | 2069 |
| 2.Mischstufe: G' at 0,98 % Zug [kPa] | 1190 | 416 | 1171 |
| Shore-A-Härte bei Raumtemperatur [Sh.U] | 76 | 68 | 76 |
| Reißfestigkeit [MPa] | 19,3 | 20,5 | 20,2 |
| Reißdehnung [%] | 306 | 378 | 353 |
| Spannungswert 100 % [MPa] | 4,3 | 2,9 | 3,8 |
| Spannungswert 300 % [MPa] | - | 15 | 16,8 |
| E*bei 60°C [MPa] | 12,3 | 7,1 | 12,3 |
| E' bei 60°C [MPa] | 12,1 | 7,0 | 12,0 |
| | | | |

| **Reifenhaftung** | | | |
|---|---|---|---|
| Rückprall [%] | 22 | 26 | 21 |
| tan delta bei 20 °C | 0,343 | 0,319 | 0,404 |

| **Rollwiderstand** | | | |
|---|---|---|---|
| tan delta bei 60 °C | 0,182 | 0,168 | 0,234 |

### Beispiel 4 - Vergleich mit TDAE-Öl (Standard)

In diesem Beispiel wurden die Eigenschaften einer Kautschukzusammensetzung, die das in Beispiel 1 b) hergestellte Additiv B enthält (Zusammensetzung D), verglichen mit den Eigenschaften einer ansonsten identischen Kautschukzusammensetzung, die nur TDAE-Öl enthält (Zusammensetzung E). Der Vergleich zeigte verbesserte Verarbeitungseigenschaften sowie eine höhere Steifigkeit der erfindungsgemäßen Kautschukzusammensetzung D, was bessere Reifenhaftungseigenschaften mit sich bringt (niedrigerer Rückprall, höherer tan delta bei 0 °C und nur gering höherer tan delta bei 60 °C).

**Tabelle 3**

| **Zusammensetzung** | **D** | **E** |
|---|---|---|
| Sprintan SLR 3402 | 80 | 80 |
| Buna CB 24 | 20 | 20 |
| Ultrasil 7000 GR | 100 | 100 |
| Struktol SCA 985 | 8 | 8 |
| Luvomaxx BC N-330 | 8 | 8 |
| ZnO Harzsiegel GR | 2,5 | 2,5 |
| Varazon 5998 | 1,5 | 1,5 |
| Stearinsäure | 1 | 1 |
| Richon 6PPD | 2 | 2 |
| Schwefel | 1,4 | 1,4 |
| Double Vigour CBS-G | 1,7 | 1,7 |
| Double Vigour DPG-C | 2 | 2 |
| Tudalen 4192 (TDAE oil) | 15 | 20 |
| Additiv B | 5 | |
| | | |

| **Verarbeitbarkeit** | | |
|---|---|---|
| 1.Mischstufe: Mooney MS [1+4] 100 °C [MU] | 91 | 102 |
| 2.Mischstufe: Mooney MS [1+4] 100 °C [MU] | 77 | 86 |
| 2 Wochen/ RT | 84 | 98 |
| Garvey Die, 60 rpm/min Materialdruck [bar] | 92 | 100 |
| | | |

| **Reifenabrieb, Handling** | | |
|---|---|---|
| 1.Mischstufe: G' bei 0,98 % Zug [kPa] | 3152 | 2769 |
| 2.Mischstufe: G' at 0,98 % Zug [kPa] | 1808 | 1857 |
| Reißfestigkeit [MPa] | 19 | 20 |
| Reißdehnung [%] | 291 | 334 |
| Spannungswert 100 % [MPa] | 4 | 4 |
| E*bei 60 °C [MPa] | 16 | 14 |
| E' bei 60 °C [MPa] | 16 | 13 |
| | | |

| **Reifenhaftung** | | |
|---|---|---|
| Rückprall [%] | 36 | 37 |
| tan delta bei 0 °C | 0,392 | 0,359 |
| tan delta bei 20 °C | 0,339 | 0,287 |
| | | |

| **Rollwiderstand** | | |
|---|---|---|
| tan delta bei 60 °C | 0,222 | 0,194 |

### Beispiel 5 - Vergleich mit kurzkettigen Kolophoniumharzester

In diesem Beispiel wurden die Eigenschaften einer Kautschukzusammensetzung, die das in Beispiel 1 b) hergestellte Additiv B enthält (Zusammensetzung F), verglichen mit den Eigenschaften einer ansonsten identischen Kautschukzusammensetzung, die einen kurzkettigen Kolophoniumharzester enthält (Pinerez 7024E (Kolophoniumharzester aus Kolophoniumharz und Triethylenglykol), Zusammensetzung G).

Die erfindungsgemäße Zusammensetzung F zeigte eine höhere Steifigkeit, einen besseren Rollwiderstand und bessere Reifenhaftung, bei gleich guter Verarbeitbarkeit.

**Tabelle 4**

| **Zusammensetzung** | **F** | **G** |
|---|---|---|
| Sprintan SLR 3402 | 80 | 80 |
| Buna CB 24 | 20 | 20 |
| Ultrasil 7000 GR | 100 | 100 |
| Struktol SCA 985 | 8 | 8 |
| Luvomaxx BC N-330 | 8 | 8 |
| Tudalen 4192 (TDAE oil) | 15 | 15 |
| ZnO Harzsiegel GR | 2,5 | 2,5 |
| Varazon 5998 | 1,5 | 1,5 |
| Stearinsäure | 1 | 1 |
| Richon 6PPD | 2 | 2 |
| Schwefel | 1,4 | 1,4 |
| Double Vigour CBS-G | 1,7 | 1,7 |
| Double Vigour DPG-C | 2 | 2 |
| Additiv B | 15 | |
| Pinerez 7024 | | 15 |
| | | |

| **Verarbeitbarkeit** | | |
|---|---|---|
| 1.Mischstufe: Mooney MS [1+4] 100 °C [MU] | 76 | 70 |
| 2.Mischstufe: Mooney MS [1+4] 100 °C [MU] | 96 | 98 |
| 24 h / RT | 54 | 55 |
| 1 Woche/ RT | 59 | 58 |
| Garvey Die, 60 rpm/min Materialdruck [bar] | 65 | 71 |
| | | |

| **Reifenabrieb, -handling** | | |
|---|---|---|
| Reißfestigkeit [MPa] | 21,8 | 23,4 |
| Reißdehnung [%] | 414 | 532 |
| Spannungswert 100 % [MPa] | 3,1 | 2,5 |
| Spannungswert 300 % [MPa] | 14,4 | 10,5 |
| E*bei 60°C [MPa] | 13,8 | 11,7 |
| E' bei 60°C [MPa] | 13,5 | 11,3 |
| | | |

| **Reifenhaftung** | | |
|---|---|---|
| Rückprall [%] | 35 | 32 |
| tan delta bei 0 °C | 0,493 | 0,45 |
| tan delta bei 20 °C | 0,418 | 0,385 |
| | | |

| **Rollwiderstand** | | |
|---|---|---|
| tan delta bei 60 °C | 0,22 | 0,268 |

### Beispiel 6 - Vergleich mit Reifenharzen

In diesem Beispiel wurden die Eigenschaften einer Kautschukzusammensetzung, die das in Beispiel 1 a) hergestellte Additiv A enthält (Zusammensetzung H), verglichen mit den Eigenschaften einer ansonsten identischen Kautschukzusammensetzung, die einen kommerziell erhältliches Reifenharz enthält (Novares C 10, Zusammensetzung I).

Die erfindungsgemäße Kautschukzusammensetzung H zeigte eine höhere Steifigkeit und somit bessere Reifenhaftung, sowie eine verbesserte Verarbeitbarkeit bei gleichzeitig gutem Rollwiderstand.

**Tabelle 5**

| **Zusammensetzung** | **H** | **I** |
|---|---|---|
| Sprintan 918S | 100 | 100 |
| Buna CB 24 | 20 | 20 |
| Zeosil Premium 200 MP | 80 | 80 |
| Struktol SCA 985 | 8 | 8 |
| N-330 Corax | 8 | 8 |
| ZnO Harzsiegel GR | 2,5 | 2,5 |
| Varazon 5998 | 1,5 | 1,5 |
| Stearinsäure | 1 | 1 |
| Santoflex 6PPD | 2 | 2 |
| Schwefel | 1,4 | 1,4 |
| Double Vigour TBBS-G | 1,7 | 1,7 |
| Ekaland DPG | 2 | 2 |
| Additiv A | 15 | |
| Novares C 10 | | 15 |
| | | |

| **Verarbeitbarkeit** | | |
|---|---|---|
| 1.Mischstufe: Mooney MS [1+4] 100 °C [MU] | 79 | 94 |
| 2.Mischstufe: Mooney MS [1+4] 100 °C [MU] | 59,0 | 85 |
| 3.Mischstufe: Mooney MS [1+4] 100 °C [MU] | 94,0 | 125 |
| 2 Wochen / RT | 61 | 85 |
| | | |

| **Reifenabrieb, -handling** | | |
|---|---|---|
| G' bei 0,98% Zug (kPa) | 553 | 791 |
| Reißfestigkeit [MPa] | 25,3 | 24,5 |
| Reißdehnung [%] | 464,0 | 518,0 |
| Spannungswert 100 % [MPa] | 4 | 2 |
| Spannungswert 300 % [MPa] | 15,7 | 11,8 |
| E*bei 60°C [MPa] | 8 | 7 |
| E' bei 60°C [MPa] | 7,7 | 6,4 |
| | | |

| **Reifenhaftung** | | |
|---|---|---|
| Rückprall [%] | 23 | 26 |
| tan delta bei 0 °C | 0,682 | 0,616 |
| tan delta bei 20 °C | 0,42 | 0,334 |
| | | |

| **Rollwiderstand** | | |
|---|---|---|
| tan delta bei 60 °C | 0,165 | 0,166 |

### Beispiel 7 - Ergebnisse mit Polyethylenglykol-Kolophoniumharzester

In diesem Beispiel wurden die Eigenschaften einer Kautschukzusammensetzung, die als erfindungsgemäße Kautschukadditive Additiv C' (Zusammensetzung J) bzw. Additiv D (Zusammensetzung K) enthalten, verglichen mit den Eigenschaften einer ansonsten identischen Kautschukzusammensetzung, die ein niedermolekulares (Vergleichs-)Additiv E enthält (Zusammensetzung L). Bei dem erfindungsgemäßen Additiv C' handelt es sich um einen PEG 400-Kolophoniumharzester und bei dem erfindungsgemäßen Additiv D handelt es sich um einen PEG 600-Kolophoniumharzester. In Bezug auf deren Herstellung kann auf die möglichen Synthesemethoden gemäß Beispiel 1a) bis 1c) verwiesen werden. Das zur Herstellung verwendete Kolophoniumharz wies eine Säurezahl von 158 mg KOH/g auf. Bei dem Vergleichsadditiv E handelt es sich um einen mit demselben Verfahren hergestellten Diethylenglykol-Kolophoniumharzester.

Die erfindungsgemäßen Additive zeigten eine höhere Steifigkeit, einen verbesserten Rollwiderstand, sowie eine verbesserte Verarbeitbarkeit.

**Tabelle 6**

| **Zusammensetzung** | **J** | **K** | **L** |
|---|---|---|---|
| Sprintan SLR 3402 | 80 | 80 | 80 |
| Buna CB 24 | 20 | 20 | 20 |
| Ultrasil 7000 GR | 100 | 100 | 100 |
| Struktol SCA 985 | 8 | 8 | 8 |
| Luvomaxx BC N-330 | 8 | 8 | 8 |
| Tudalen 4192 (TDAE oil) | 15 | 15 | 15 |
| ZnO Harzsiegel GR | 2,5 | 2,5 | 2,5 |
| Varazon 5998 | 1,5 | 1,5 | 1,5 |
| Stearinsäure | 1 | 1 | 1 |
| Richon 6PPD | 2 | 2 | 2 |
| Schwefel | 1,4 | 1,4 | 1,4 |
| Double Vigour CBS-G | 1,7 | 1,7 | 1,7 |
| Double Vigour DPG-C | 2 | 2 | 2 |
| Additiv C' | 15 | | |
| Additiv D | | 15 | |
| Vergleichsadditiv E | | | 15 |
| | | | |

| **Verarbeitbarkeit** | | | |
|---|---|---|---|
| 1.Mischstufe: Mooney MS [1+4] 100 °C [MU] | 85 | 75 | 75 |
| 2.Mischstufe: Mooney MS [1+4] 100 °C [MU] | 104 | 101 | 105 |
| 24 h / RT | 59 | 57 | 59 |
| 1 Woche / RT | 61 | 62 | 65 |
| Garvey Die, 60 rpm/min Materialdruck [bar] | 60 | 57 | 57 |
| Kanten/Oberflächenbeurteilung | 9A | 9A | 6A |
| | | | |

| **Reifenabrieb, -handling** | | | |
|---|---|---|---|
| G' bei 0,98 % Zug [kPa] | 1628 | 1414 | 954 |
| Reißfestigkeit [MPa] | 21 | 21,3 | 22,6 |
| Reißdehnung [%] | 399 | 421 | 482 |
| Spannungswert 100 % [MPa] | 3,2 | 3,2 | 2,6 |
| Spannungswert 300 % [MPa] | 14,6 | 14,1 | 11,9 |
| E*bei 60°C [MPa] | 15 | 12,7 | 13,8 |
| E' bei 60°C [MPa] | 14,8 | 12,5 | 13,3 |
| | | | |

| **Reifenhaftung** | | | |
|---|---|---|---|
| Rückprall [%] | 38 | 39 | 31? |
| tan delta bei 0 °C | 0,447 | 0,442 | 0,44 |

| **Zusammensetzung** | **J** | **K** | **L** |
|---|---|---|---|
| **Rollwiderstand** | | | |
| tan delta bei 60 °C | 0,173 | 0,167 | 0,272 |

Eine Abbildung der drei verschiedenen Extruduate der Zusammensetzungen J, K und L ist in Figur 1 dargestellt. Wie abgebildet, weisen die erfindungsgemäßen Kautschukzusammensetzungen weniger Kanten auf.

## Patentansprüche

1. Kautschukzusammensetzung, die Kautschuk und mindestens ein Kautschukadditiv enthält, **dadurch gekennzeichnet, dass** das mindestens eine Kautschukadditiv Kolophoniumharzester aus Kolophoniumharz und mindestens einem Alkohol umfasst, wobei das zur Herstellung des Kolophoniumharzesters eingesetzte Kolophoniumharz eine Säurezahl von 130 bis 190 mg KOH/g aufweist und der bzw. die eingesetzte(n) Alkohol(e) mindestens 2 Hydroxylgruppen und nicht mehr als sieben Hydroxylgruppen und ein Molekulargewicht von mindestens 200 g/mol aufweist bzw. aufweisen.

2. Kautschukzusammensetzung nach Anspruch 1, **dadurch gekennzeichnet, dass** der zur Herstellung des Kolophoniumharzesters eingesetzte mindestens eine Alkohol ein Molekulargewicht von mindestens 380, vorzugsweise 380 bis 2000 g/mol, aufweist und/oder
dass der zur Herstellung des Kolophoniumharzesters eingesetzte mindestens eine Alkohol 2, 3 oder 4 Hydroxylgruppen aufweist.

3. Kautschukzusammensetzung nach einem der vorhergehenden Ansprüche, **dadurch gekennzeichnet, dass** der zur Herstellung des Kolophoniumharzesters eingesetzte mindestens eine Alkoholausgewählt ist aus der Gruppe bestehend aus C₂- bis C₄-Alkoxylat eines Polyols, Polyethylenglykol, Polypropylenglykol und/oder Copolymer aus Ethylenoxid und Propylenoxid,
wobei der zur Herstellung des Kolophoniumharzesters eingesetzte mindestens eine Alkohol vorzugsweise ausgewählt ist aus der Gruppe bestehend aus Polyethylenglykol (PEG), wie PEG mit einem Molekulargewicht von 200 bis 800 g/mol, Polypropylenglykol (PPG), wie PPG mit einem Molekulargewicht von 200 bis 800 g/mol und ethoxyliertem Glycerin, dass insbesondere bis zu 10 wie 5 bis 10, z. B. 7 Ethylenoxid-Einheiten (EO-Einheiten) aufweist.

4. Kautschukzusammensetzung nach einem der vorhergehenden Ansprüche, wobei das zur Herstellung des Kolophoniumharzesters eingesetzte Kolophoniumharz eine Säurezahl von 140 bis 180 mg KOH/g aufweist.

5. Kautschukzusammensetzung nach einem der vorhergehenden Ansprüche, **dadurch gekennzeichnet, dass** die Zusammensetzung zwischen 0,1 bis 40 phr Kolophoniumharzester enthält, vorzugsweise 1 bis 30 phr und/oder dass das zur Herstellung des Kolophoniumharzesters eingesetztes Kolophoniumharz ein disproportioniertes Kolophoniumharz ist.

6. Kautschukzusammensetzung nach einem der vorhergehenden Ansprüche, **dadurch gekennzeichnet, dass** sie mindestens einen Styrol-Butadien-Kautschuk, Polyisopren-Kautschuk, Naturkautschuk und/oder Butadien-Kautschuk sowie gegebenenfalls deren funktionalisierte Formen umfasst.

7. Kautschukzusammensetzung nach einem der vorhergehenden Ansprüche, **dadurch gekennzeichnet, dass** die Zusammensetzung nach der Vulkanisation im Vergleich zu einer identischen Zusammensetzung, die stattdessen ein bekanntes Kautschukadditiv in identischer Menge umfasst, einen mindestens 5 %, vorzugsweise 10 %, niedrigeren Rollwiderstand, tan delta bei 60°C und/oder eine 5 %, vorzugsweise 10 %, höhere Nasshaftung, tan delta bei 0 °C aufweist.

8. Kautschukzusammensetzung nach einem der vorhergehenden Ansprüche, **dadurch gekennzeichnet, dass** die Zusammensetzung für die Herstellung von Laufstreifenmischungen für Reifen geeignet ist.

9. Kautschukzusammensetzung nach einem der vorhergehenden Ansprüche, **dadurch gekennzeichnet, dass** die Zusammensetzung weitere Additive und Bestandteile enthält, die für die Herstellung von Laufstreifenmischungen für Reifen geeignet sind, insbesondere einen oder mehrere Füllstoffe und gegebenenfalls weitere Zuschlagstoffe.

10. Verwendung von Kolophoniumharzester aus Kolophoniumharz und mindestens einem Alkohol als Kautschukadditiv in einer Kautschukzusammensetzung zur Verbesserung der Mooney-Viskosität der Kautschukzusammensetzung und/oder zur Verbesserung von mindestens einem von Abrieb, Haftung und Rollwiderstand eines aus der Kautschukzusammensetzung hergestellten Reifens, wobei das eingesetzte Kolophoniumharz eine Säurezahl von 130 bis 190 mg KOH/g aufweist und der bzw. die mindestens eingesetzte(n) Alkohol(e) ein Molekulargewicht von mindestens 200 g/mol und mindestens 2 Hydroxylgruppen und nicht mehr als sieben Hydroxylgruppen aufweist bzw. aufweisen.

11. Verwendung nach Anspruch 10, wobei mindestens eine der genannten Eigenschaften um mindestens 5 %, vorzugsweise mindestens 10 % verbessert wird gegenüber einer Kautschukzusammensetzung, die stattdessen ein bekanntes Kautschukadditiv in identischer Menge umfasst.

12. Verwendung nach Anspruch 10 oder Anspruch 11, **dadurch gekennzeichnet, dass** der Kolophoniumharzester ist wie in einem der Ansprüche 1 bis 4 definiert und/oder dass die Kautschukzusammensetzung ist wie in einem der Ansprüche 5 bis 9 definiert.

13. Verwendung nach einem der Ansprüche 10 bis 12, **dadurch gekennzeichnet, dass** eine Abmischung eingesetzt wird, die
a) ein oder mehrere feste(s) Trägermaterial(ien), wobei als Trägermaterial vorzugsweise eine Kieselsäure verwendet wird
b) einen oder mehrere der Kolophoniumharzester enthält.

14. Verfahren zur Herstellung eines Reifens, **dadurch gekennzeichnet, dass** ein oder mehrere Bauteile des Reifens aus einer Kautschukzusammensetzung gemäß einem der Ansprüche 1 bis 9 hergestellt werden und die Kautschukzusammensetzung ausgehärtet wird.

15. Reifen, bei dem wenigstens ein Bauteil zumindest teilweise aus einer Kautschukzusammensetzung gemäß einem der Ansprüche 1 bis 9 hergestellt wurde, und der Reifen vorzugsweise ein Ultra High Performance (UHP)- oder Sommerreifen ist, wobei das Bauteil insbesondere der Laufstreifen ist.

## Claims

1. Rubber composition which contains rubber and at least one rubber additive, **characterized in that** the at least one rubber additive comprises rosin ester from rosin and at least one alcohol, wherein the rosin used to prepare the rosin ester has an acid number of from 130 to 190 mg KOH/g and the alcohol(s) used has or have not more than seven hydroxyl groups and a molecular weight of at least 200 g/mol.

2. The rubber composition according to claim 1, **characterized in that** the at least one alcohol used to prepare the rosin ester has a molecular weight of at least 380, preferably from 380 to 2000 g/mol, and/or
that the at least one alcohol used to prepare the rosin ester has 2, 3 or 4 hydroxyl groups.

3. The rubber composition according to any one of the preceding claims, **characterized in that** the at least one alcohol used to prepare the rosin ester is selected from the group consisting of C₂ to C₄ alkoxylate of a polyol, polyethylene glycol, polypropylene glycol and/or copolymer of ethylene oxide and propylene oxide,
wherein the at least one alcohol used to prepare the rosin ester is preferably selected from the group consisting of polyethylene glycol (PEG), such as PEG having a molecular weight of from 200 to 800 g/mol, polypropylene glycol (PPG), such as PPG having a molecular weight of from 200 to 800 g/mol and ethoxylated glycerol that has in particular up to 10, such as 5 to 10, e.g. 7, ethylene oxide units (EO units).

4. The rubber composition according to any one of the preceding claims, wherein the rosin used to prepare the rosin ester has an acid number of from 140 to 180 mg KOH/g.

5. The rubber composition according to any one of the preceding claims, **characterized in that** the composition contains between 0.1 and 40 phr rosin ester, preferably 1 to 30 phr, and/or that the rosin used to prepare the rosin ester is a disproportionated rosin.

6. The rubber composition according to any one of the preceding claims, **characterized in that** it comprises at least one styrene-butadiene rubber, polyisoprene rubber, natural rubber and/or butadiene rubber as well as optionally the functionalized forms thereof.

7. The rubber composition according to any one of the preceding claims, **characterized in that** the composition has an at least 5%, preferably 10%, lower rolling resistance, tan delta at 60 °C., and/or a 5%, preferably 10%, higher wet grip, tan delta at 0° C., after vulcanization in comparison with an identical composition which comprises a known rubber additive in identical quantity instead.

8. The rubber composition according to any one of the preceding claims, **characterized in that** the composition is suitable for the preparation of tread compounds for tyres.

9. The rubber composition according to any one of the preceding claims, **characterized in that** the composition contains further additives and constituents which are suitable for the preparation of tread compounds for tyres, in particular one or more fillers and optionally further additions.

10. The use of rosin ester from rosin and at least one alcohol as rubber additive in a rubber composition for improving the Mooney viscosity of the rubber composition and/or for improving at least one of wear, grip and rolling resistance of a tyre produced from the rubber composition, wherein the rosin used has an acid number of from 130 to 190 mg KOH/g and the alcohol(s) used has or have a molecular weight of at least 200 g/mol and at least two hydroxyl groups and not more than seven hydroxyl groups.

11. The use of claim 10, wherein at least one of the named properties is improved by at least 5%, preferably at least 10%, compared with a rubber composition which comprises a known rubber additive in identical quantity instead.

12. The use of claim 10 or claim 11, **characterized in that** the rosin ester is as defined in any one of claims 1 to 4 and/or that the rosin ester is as defined in any one of claims 5 to 9.

13. The use of any one of claims 10 to 12 **characterized in that** a blend is used which contains
a) one or more solid carrier material(s), wherein a silica is preferably used as carrier material,
b) one or more of the rosin esters.

14. Process for producing a tyre, **characterized in that** one or more component parts of the tyre are produced from a rubber composition according to any one of claims 1 to 9 and the rubber composition is cured.

15. A tyre in which at least one component part has been produced at least partially from a rubber composition according to any one of claims 1 to 9, and the tyre is preferably an Ultra High Performance (UHP) or summer tyre, wherein the component part is in particular the tyre tread.

## Revendications

1. Composition de caoutchouc, qui contient du caoutchouc et au moins un additif de caoutchouc, **caractérisée en ce que** l'au moins un additif de caoutchouc comprend de l'ester de résine de colophane à base de résine de colophane et au moins un alcool, dans laquelle la résine de colophane utilisée pour fabriquer l'ester de résine de colophane présente un indice d'acidité de 130 à 190 mg KOH/g et l'alcool ou les alcools utilisés présentent au moins 2 groupes hydroxyle et pas plus de sept groupes hydroxyle et un poids moléculaire d'au moins 200 g/mol.

2. Composition de caoutchouc selon la revendication 1, **caractérisée en ce que** l'au moins un alcool utilisé pour la fabrication de l'ester de résine de colophane présente un poids moléculaire d'au moins 380, de préférence de 380 à 2000 g/mol, et/ou
**que** l'au moins un alcool utilisé pour la fabrication de l'ester de résine de colophane présente 2, 3 ou 4 groupes hydroxyle.

3. Composition de caoutchouc selon l'une quelconque des revendications précédentes, **caractérisée en ce que** l'au moins un alcool utilisé pour la fabrication de l'ester de résine de colophane est choisi parmi le groupe constitué d'alcoxylate en C₂ à C₄ d'un polyol, de polyéthylène glycol, de polypropylène glycol et/ou de copolymère d'oxyde d'éthylène et d'oxyde de propylène,
dans laquelle l'au moins un alcool utilisé pour la fabrication de l'ester de résine de colophane est de préférence choisi parmi le groupe constitué de polyéthylène glycol (PEG), tel que PEG d'un poids moléculaire de 200 à 800 g/mol, de polypropylène glycol (PPG), tel que PPG d'un poids moléculaire de 200 à 800 g/mol et de glycérine éthoxylée, qui présente en particulier jusqu'à 10 comme 5 à 10, par exemple 7 unités d'oxyde d'éthylène (unités EO).

4. Composition de caoutchouc selon l'une quelconque des revendications précédentes, dans laquelle la résine de colophane utilisée pour la fabrication de l'ester de colophane présente un indice d'acide de 140 à 180 mg KOH/g.

5. Composition de caoutchouc selon l'une quelconque des revendications précédentes, **caractérisée en ce que** la composition contient entre 0,1 et 40 phr d'ester de résine de colophane, de préférence 1 à 30 phr et/ou que la résine de colophane utilisée pour la fabrication de l'ester de résine de colophane est une résine de colophane disproportionnée.

6. Composition de caoutchouc selon l'une quelconque des revendications précédentes, **caractérisée en ce qu'**elle comprend au moins un caoutchouc styrène-butadiène, un caoutchouc polyisoprène, un caoutchouc naturel et/ou un caoutchouc butadiène ainsi que, le cas échéant, leurs formes fonctionnalisées.

7. Composition de caoutchouc selon l'une quelconque des revendications précédentes, **caractérisée en ce que** la composition après vulcanisation en comparaison avec une composition identique, qui comprend à la place un additif de caoutchouc connu en quantité identique, présente une résistance au roulement inférieure d'au moins 5 %, de préférence 10 %, tan delta à 60 °C et/ou une adhérence sur sol mouillé plus élevée de 5 %, de préférence de 10 %, tan delta à 0 °C.

8. Composition de caoutchouc selon l'une quelconque des revendications précédentes, **caractérisée en ce que** la composition convient à la fabrication de mélanges de bandes de roulement pour pneus.

9. Composition de caoutchouc selon l'une quelconque des revendications précédentes, **caractérisée en ce que** la composition contient d'autres additifs et constituants, qui sont adaptés à la fabrication de mélanges de bandes de roulement pour pneus, en particulier une ou plusieurs charges et éventuellement d'autres agrégats.

10. Utilisation d'ester de résine de colophane à base de résine de colophane et d'au moins un alcool comme additif de caoutchouc dans une composition de caoutchouc pour améliorer la viscosité Mooney de la composition de caoutchouc et/ou pour améliorer au moins une des propriétés d'abrasion, d'adhérence et de résistance au roulement d'un pneu fabriqué à partir de la composition de caoutchouc, dans laquelle la résine de colophane utilisée présente un indice d'acidité de 130 à 190 mg KOH/g et le ou les au moins un alcools utilisés présentent un poids moléculaire d'au moins 200 g/mol et au moins 2 groupes hydroxyle et pas plus de sept groupes hydroxyle.

11. Utilisation selon la revendication 10, dans laquelle au moins l'une des propriétés précitées est améliorée d'au moins 5 %, de préférence d'au moins 10 % par rapport à une composition de caoutchouc qui comprend en lieu et place un additif de caoutchouc connu en quantité identique.

12. Utilisation selon la revendication 10 ou la revendication 11, **caractérisée en ce que** l'ester de résine de colophane est tel que défini dans l'une quelconque des revendications 1 à 4 et/ou **en ce que** la composition de caoutchouc est telle que définie dans l'une quelconque des revendications 5 à 9.

13. Utilisation selon l'une quelconque des revendications 10 à 12, **caractérisée en ce qu'**un mélange est utilisé, qui contient
a) un ou plusieurs matériaux porteurs solides, dans laquelle un acide silicique est de préférence utilisé comme matériau porteur
b) une ou plusieurs des esters de résine de colophane.

14. Procédé de fabrication d'un pneu, **caractérisé en ce qu'**un ou plusieurs composants du pneu sont fabriqués à partir d'une composition de caoutchouc selon l'une quelconque des revendications 1 à 9 et la composition de caoutchouc est durcie.

15. Pneu, dans lequel au moins un composant a été fabriqué au moins en partie à partir d'une composition de caoutchouc selon l'une quelconque des revendications 1 à 9, et le pneu est de préférence un pneu à ultra-haute performance (UHP) ou un pneu d'été, dans lequel le composant est en particulier la bande de roulement.
